# EUROPEAN PATENT APPLICATION

(11) **EP 2 620 414 A2**
(43) Date of publication of application: **31.07.2013**
(21) Application number: 13250011.7
(22) Date of filing: 24.01.2013
(51) Int. Cl.: C02F 1/42, B01J 47/02

(54) **Ion exchanger**

(30) Priority: 30.01.2012 GB 201201523
(71) Applicant: Sentinel Performance Solutions Ltd, Runcorn Cheshire WA7 4QX (GB)
(72) Inventor: Marshall, Alan, Warrington, Cheshire WA4 5HG (GB); Day, Paul, 2000 Antwerp (BE)
(74) Representative: Fenwick, Elizabeth Anne

(57) **Abstract**

A two stage ion exchange assembly suitable for treating water particularly the water supply to a closed system such as a heating system, comprises a primary ion exchange unit and a secondary ion exchange unit arranged in combination so that in use water to be treated will pass through the primary ion exchange unit before it passes through the secondary ion exchange unit and wherein the secondary ion exchange unit includes a means to give a visual warning that the primary ion exchange unit is not treating the water efficiently.

## Description

The invention relates to a novel arrangement of an ion exchange unit containing an ion exchange medium wherein the unit is provided with an indicator means which will provide a visual warning when the ion exchange unit needs changing or regenerating.

In most circulating heating systems, water is used as a heat transfer medium whose source is potable water supplied by municipal authorities. The natural chemical constituents found in water often include dissolved minerals whose concentration can vary over a large range of values depending on the source, geographical location or season whilst still meeting the basic obligation for potability. The chemical constituents of these dissolved minerals which characterise waters 'hardness' are predominantly the carbonates and bicarbonates of calcium and magnesium. These remain soluble in cold water but when hard water is heated, the nature of these compounds is such that they precipitate from the water to form an insoluble mineral deposit, generally termed 'scale' or 'limescale' and this happens most readily on the hottest surfaces. Water having a high mineral content has a high scaling potential. As a result of the interaction between the water with the heat transfer surfaces a layer of scale is formed, resulting in a reduction of heat transfer efficiency and commensurate system inefficiency due to the thermal insulating properties of the layer. In particular due to the increase in the efficiency of boilers, the heating surface loads (kW/m²) and surface temperatures of the heat transfer surfaces on the water side have progressively increased in recent years. As a result, when a layer of scale forms, the effects are far more severe in modern boilers than with older models; just one millimetre of scale thickness leads to a reduction in boiler efficiency of 7.5%.

To overcome this potential problem, in many applications it is desirable to use only softened or fully demineralised water e.g. in the water supply to a 'closed' system where water is the circulating fluid of a heating system serviced by a central heat source. These approaches remove the potential of the water to form insoluble limescale coatings. One known way to achieve such a water is by pre-treating the incoming water supply with an ion exchange unit containing a cationic ion exchange medium which removes calcium and magnesium ions (and other scale-forming cations) from the water. Alternatively it may comprise a so-called 'mixed-bed' or 'stratified bed' medium of both cationic and anionic media which effect removal of most or all ionic species from the water. In addition, chemical inhibitors can also be added to protect against the corrosivity of the water which has been softened or demineralised.

Examples of ion exchange media are natural or synthetic zeolites or more preferably in the form of resin (1-2 mm diameter) beads fabricated from an organic polymer substrate, e.g. crosslinked polystyrene and containing strongly or weakly acidic functional groups or strongly or weakly basic functional groups. These materials have highly developed pore structures on their surfaces which are sites that easily trap, exchange and release ions. Ion exchange media are characterised by their ion exchange capacity which is the measure of their ability to undergo displacement of ions incorporated into their structure by charged ions present in the surrounding solution and may be expressed as the total number of chemical equivalents available for exchange per unit weight or unit volume of medium or resin. The capacity may be expressed in terms of milli-equivalents per dry gram of resin or in terms of milli-equivalents per milli-litre of wet resin.

A disadvantage of these known methods is that it is difficult to know exactly when a softening or demineralising unit is coming to the end of its life. If it is changed too soon then that leads to increased cost, whereas if it is not changed soon enough the improperly treated hard water can cause the problems already discussed.

The aim of the invention is to provide a primary ion exchange unit in combination with a secondary ion exchange unit wherein the secondary ion exchange unit acts as an indicator that the primary ion exchange unit is exhausted by displaying a visual warning. The arrangement is particularly applicable to treat the water which is being supplied to a closed system e.g. where water is the circulating fluid of a heating system serviced by a central heat source.

According to one aspect of the present invention an assembly suitable for treating water comprises a primary ion exchange unit and a secondary ion exchange unit arranged in combination so that in use water to be treated will pass through the primary ion exchange unit before it passes through the secondary ion exchange unit and wherein the secondary ion exchange unit includes a means to give a visual warning that the primary ion exchange unit is not treating the water efficiently.

The primary unit and secondary units are connected directly or indirectly (more preferably directly) together so that water flows through the primary unit and then through the secondary unit i.e. the secondary unit is downstream of the primary unit. Thus, so long as the primary unit is operating efficiently, the water entering the secondary unit has been softened or demineralised and the ion exchange medium therein is largely unaffected. It is only when the primary unit is exhausted and ceases to be effective that hard, untreated water enters the secondary unit and the ion exchange medium therein begins to exchange ions. Preferably the secondary unit contains only a comparatively very small amount of ion exchange medium so that this becomes quickly exhausted. In other words, the total exchange capacity of the mass of resin in the secondary unit is very much less than the total exchange capacity of the mass of resin in the primary unit so that very soon after the primary unit becomes exhausted the secondary unit does so too. The mass or total exchange capacity of resin in the primary unit need bear no fixed mass or total exchange capacity ratio relationship with the mass or total exchange capacity of resin in the secondary unit, but is preferably at least 50 times greater. Further, it is desirable that in any circumstances, after exhaustion of the primary resin, the mass or total exchange capacity of the of the resin in the secondary ion exchange unit is such that it becomes exhausted after treating a small volume of the water needing to be softened or demineralised, preferably less than 20 litres and most preferably less than 5 litres. As the secondary unit becomes exhausted, it provides a visual warning of this fact. Preferably the visual warning is achieved by using an ion exchange medium in the secondary unit which changes colour as it becomes exhausted. Preferably this colour change can be viewed through a window provided in the wall of the secondary unit e.g. a glass or other transparent material. Colour-changing ion exchange materials are those having chemical indicator compounds on the anionic or cationic (or both) components of the respective exchange resins, and this moiety effects a colour change on exhaustion. The colours will depend upon the dye used. The nature of the colour indicating resin (anionic, cationic or mixed) in the secondary unit must be chosen with consideration to the nature of the type of resin in the primary unit. Such colour indicating resins are available commercially (e.g. from Purolite, Dow and other manufacturers and their distributors).

There are various arrangements possible for the primary and secondary units.
1. The units may be discrete units detachably connected together by means of suitable fittings.
2. The units may be integrally formed as one, but with a separating means between them to prevent intermixing of the respective ion exchange media.

Invariably, the units will be ordered in-line sequentially so that the water flow flows first through the primary unit and then directly into and through the secondary unit.

The ratio of total exchange capacity of the volume of the ion exchange medium in the primary unit to that of the total exchange capacity of the volume of ion exchange medium in the secondary unit is preferably greater than 20:1, more preferably greater than 500:1.

The following is an Example of a preferred embodiment with reference to Figures 1 to 5 in which:
Figure 1 is a schematic view of a secondary ion exchange unit.
Figure 2 is a graph indicating the progress of water treatment through a primary ion exchange unit connected inline to the secondary ion exchange unit shown in Figure 1.
Figure 3 is a schematic view of the secondary ion exchange unit of Figure 1 when water treatment starts.
Figure 4 is a schematic view of the secondary ion exchange unit of Figure 1 when 500 litres of water has been treated.
Figure 5 is a schematic view of the secondary ion exchange unit of Figure 1 when 600 litres of water has been treated.

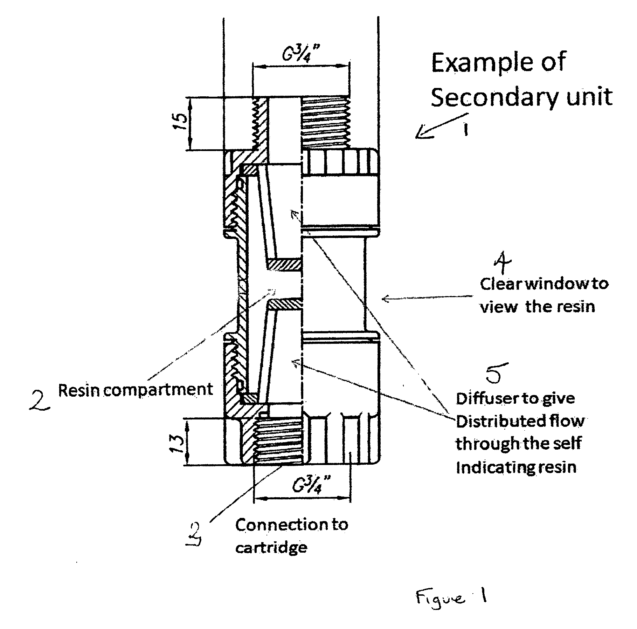

Referring to Figure 1, a primary ion exchange unit (not shown) is connected inline by means of complementary screw threaded portions ( one of which is shown as 3) with a secondary ion exchange unit 1 containing a mixed bed ion exchange resin initially coloured blue held in a resin compartment 2. The resin held in resin compartment 2 can be viewed through a clear window 4. The secondary unit 1 is fitted with a diffuser 5 to improve water flow through the resin. The end of the secondary unit 1 away from the connection 3 to the primary unit is provided with a screw threaded portion complementary to other pipework in the central heating system, thus allowing easy assembly and removal of the secondary/primary ion exchange unit assembly. The assembly of primary and secondary ion exchange units is connected into the pipework of a water supply to a central heating system.

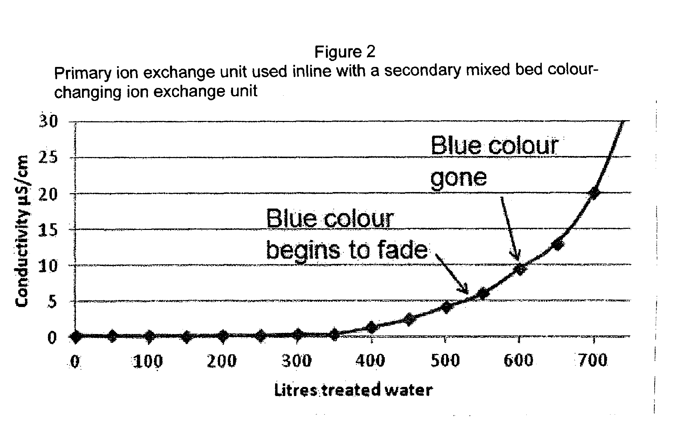

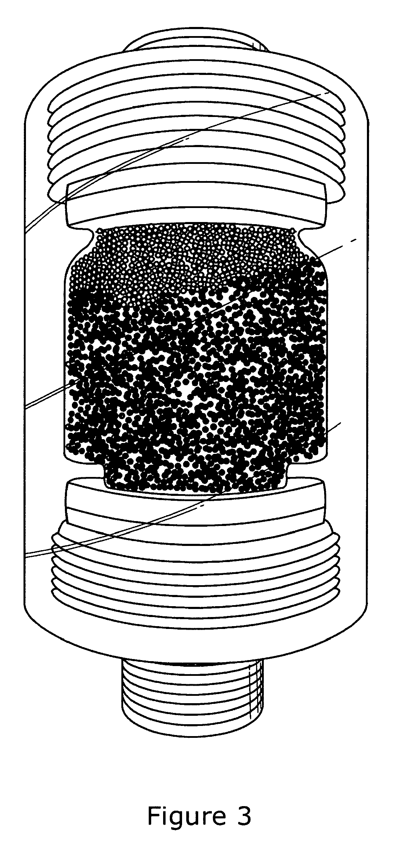

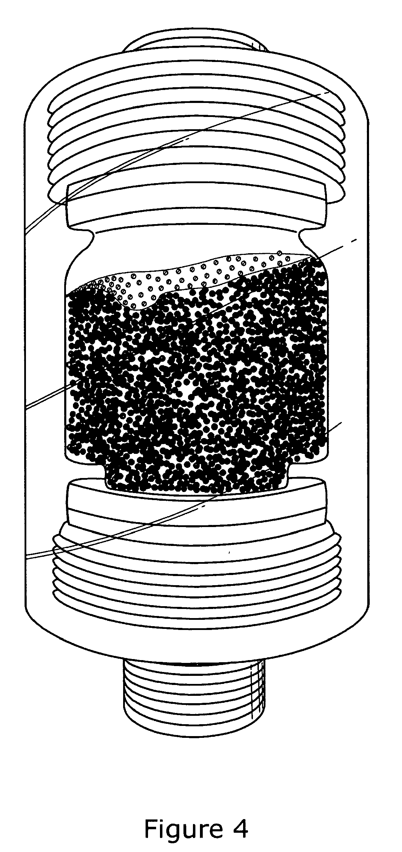

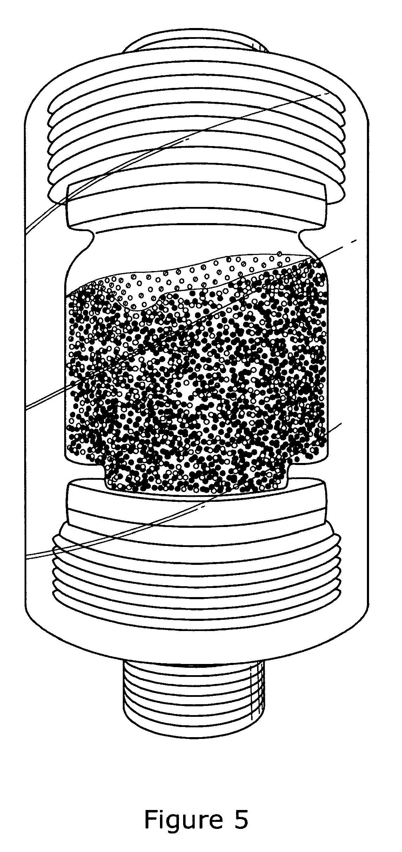

The initial conductivity of the water supply was 185µS/cm (microSiemens/cm) In the graph shown in Figure 2, the vertical scale indicates the conductivity in µS/cm (microSiemens/cm) of the water supply after it has passed through the primary unit and then through the secondary unit before passing into the central heating system. The horizontal scale indicates the litres of water which have passed through the primary unit and then through the secondary unit. The maximum acceptable level of conductivity of the effluent water (treated water) is 5 µS/cm (ASTM D1193-91); once that level is reached then the primary unit is deemed exhausted. As can be seen, the primary unit efficiently treats the first 550 litres of water but thereafter the efficiency of the primary unit falls due to the resin becoming less efficient. The fading of the 'indicating' resin from blue to nearly colourless is shown in Figures 3, 4 and 5, which show the colour of the resin at 0, 550 and 600 litres respectively. Initially the resin is blue (shown as black in Figure 3) After 550 litres of water the blue colour of the resin in the secondary unit begins to fade as can be seen in Figure 4 through a glass window (see Figure 1) and after 600 litres of water the blue colour has disappeared (see Figure 5 shown as faded to grey/white). This initial fading at 550 litres is a visible warning that the ion exchange resin in the primary unit must be changed or regenerated and that the secondary unit must be discarded.

It will be appreciated that certain features of the invention, which are, for clarity, described in the context of separate embodiments, may also be provided in combination in a single embodiment. Conversely, various features of the invention which are, for brevity, described in the context of a single embodiment, may also be provided separately or in any suitable combination.

## Claims

1. An assembly suitable for treating water comprises a primary Ion exchange unit and a secondary ion exchange unit arranged in combination so that in use water to be treated will pass through the primary ion exchange unit before it passes through the secondary ion exchange unit and wherein the secondary ion exchange unit includes a means to give a visual warning that the primary ion exchange unit is not treating the water efficiently.

2. An assembly according to claim 1 wherein the primary ion exchange unit and secondary ion exchange unit are discrete units detachably connected together.

3. An assembly according to claim 1 or 2 wherein the primary ion exchange unit is connected directly to the secondary ion exchange unit.

4. An assembly according to claim 1 wherein the primary ion exchange unit and secondary ion exchange unit are integrally formed as one with a separating means between them which in use will prevent intermixing of the respective ion exchange media.

5. An assembly according to any preceding claim wherein the ratio of total exchange capacity of the volume of the ion exchange medium in the primary ion exchange unit to that of the total exchange capacity of the volume of ion exchange medium in the secondary ion exchange unit is greater than 20:1.

6. An assembly according to any preceding claim wherein the ratio of total exchange capacity of the volume of the ion exchange medium in the primary ion exchange unit to that of the total exchange capacity of the volume of ion exchange medium in the secondary ion exchange unit is greater than 50:1.

7. An assembly according to any preceding claim wherein the ratio of total exchange capacity of the volume of the ion exchange medium in the primary ion exchange unit to that of the total exchange capacity of the volume of ion exchange medium in the secondary ion exchange unit is greater than 500:1.

8. An assembly according to any preceding claim wherein the total exchange capacity of the resin in the secondary ion exchange unit is such that it becomes exhausted after treating less than 20 litres of water.

9. An assembly according to any of claims 1 to 7 wherein the total exchange capacity of the resin in the secondary ion exchange unit is such that it becomes exhausted after treating less than 5 litres of water.

10. An assembly according to any preceding claim wherein the means to give a visual warning comprises an ion exchange medium in the secondary ion exchange unit which changes colour as it becomes exhausted.

11. An assembly according to any preceding claim wherein a window is provided in the secondary ion exchange unit to allow the visual warning to be viewed.

12. An assembly according to claim 11 wherein the window is transparent.

13. An assembly according to any preceding claim when used to treat a water supply to a closed system.

14. An assembly according to claim 13 when used to treat water which is the circulating fluid of a heating system serviced by a central heat source.
